(19) Europäisches Patentamt
European Patent Office
Office européen des brevets

(11) EP 1 446 431 B1

(12) # EUROPÄISCHE PATENTSCHRIFT

(45) Veröffentlichungstag und Bekanntmachung des Hinweises auf die Patenterteilung:
**24.05.2006 Patentblatt 2006/21**

(21) Anmeldenummer: **02777269.8**

(22) Anmeldetag: **30.09.2002**

(51) Int Cl.:
***C08F 212/08*** (2006.01) ***C08F 236/06*** (2006.01)

(86) Internationale Anmeldenummer:
**PCT/EP2002/010966**

(87) Internationale Veröffentlichungsnummer:
**WO 2003/029313 (10.04.2003 Gazette 2003/15)**

(54) **VERFAHREN ZUR HERSTELLUNG WÄSSRIGER STYROL-BUTADIEN-POLYMERDISPERSIONEN**

METHOD FOR PRODUCING AQUEOUS STYRENE-BUTADIENE POLYMER DISPERSIONS

PROCEDE DE PREPARATION DE DISPERSIONS AQUEUSES DE POLYMERE STYRENE-BUTADIENE

(84) Benannte Vertragsstaaten:
**AT BE BG CH CY CZ DE DK EE ES FI FR GB GR IE IT LI LU MC NL PT SE SK TR**

(30) Priorität: **01.10.2001 DE 10148497**

(43) Veröffentlichungstag der Anmeldung:
**18.08.2004 Patentblatt 2004/34**

(73) Patentinhaber: **BASF Aktiengesellschaft**
**67056 Ludwigshafen (DE)**

(72) Erfinder:
- **MANDERS, Lambertus**
**67069 Ludwigshafen (DE)**
- **WIRTH, Thomas**
**67251 Freinsheim (DE)**
- **GASCHLER, Wolfgang**
**69126 Heidelberg (DE)**
- **KRÖNER, Hubertus**
**67435 Neustadt (DE)**

(74) Vertreter: **Reitstötter - Kinzebach**
**Ludwigsplatz 4**
**67059 Ludwigshafen (DE)**

(56) Entgegenhaltungen:
**EP-A- 0 407 059** **EP-A- 0 666 274**
**US-A- 5 703 157**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung einer wässrigen Styrol-Butadien-Polymerdispersion durch radikalische, wässrige Emulsionspolymerisation einer Styrol- und Butadien-enthaltenden Monomermischung nach einem Monomerzulaufverfahren.

Wässrige Styrol-Butadien-Copolymerdispersionen finden in vielfältiger Weise Verwendung, insbesondere als Bindemittel in Beschichtungszusammensetzungen wie Dispersionsfarben und Papierstreichfarben, in Barrierebeschichtungen, als Rückenbeschichtung für Teppichböden, als Klebrohstoff in Teppichklebern, in Bauklebern, zur Modifizierung von Mörtel, Zement und Asphalt, zur Verfestigung von Vliesstoffen, in Dichtmassen, in Formschaumteilen und als Bindemittel für die Lederzurichtung.

Die Herstellung dieser Dispersionen erfolgt in der Regel durch radikalische wässrige Emulsionspolymerisation von Styrol und Butadien enthaltenden Monomermischungen. Bei diesen Verfahren werden häufig Kettenübertragungsmittel verwendet, um eine zu starke Vernetzung der Polymere, die sich nachteilig auf die anwendungstechnischen Eigenschaften der Dispersion auswirken kann, zu vermeiden. Derartige Substanzen regeln das Molekulargewicht der sich bildenden Polymerketten und werden daher auch als Regler bezeichnet.

Im Stand der Technik werden unterschiedlichste Substanzen als Regler vorgeschlagen. Von kommerzieller Bedeutung sind hierbei Verbindungen mit Thiolgruppen, insbesondere Alkylmercaptane wie n- und tert.-Dodecylmercaptan (siehe z.B. Ullmanns Encyclopedia of Industrial Chemistry, 5th ed. on CD-ROM, Synthetic Rubber 2.1.2). Diese Substanzen sind jedoch in verschiedener Hinsicht von Nachteil, beispielsweise sind sie aufgrund ihres unangenehmen Geruchs sowohl vor als auch während der Polymerisation schlecht zu handhaben. Nachteilig ist auch ihre Auswirkung auf den Eigengeruch der Dispersionen. Dieser läßt sich auch durch aufwendige Desodorierungsmaßnahmen nicht vollständig unterdrücken.

Verschiedentlich wurden im Stand der Technik andere Regler für die Emulsionscopolymerisation von Styrol mit Butadien vorgeschlagen. So werden in der DE 195 12 999 schwefelhaltige Regler in Kombination mit Kohlenwasserstoffen wie $\alpha$-Methylstyrol-Dimer und Terpinolen als Regler verwendet.

Aus der EP-A 407 059 ist ein Verfahren zur Emulsionspolymerisation von Styrol und Butadien enthaltenden Monomermischungen bekannt, bei dem Mischungen aus Terpinolen in Kombination mit weiteren Kettenübertragungsmitteln eingesetzt werden.

Es wurde nun gefunden, dass Terpinolen und andere Kohlenwasserstoffe, die unter Abstraktion eines Wasserstoffatoms als Kettenübertragungsmittel ein Pentadtenyl-Radikal oder ein 1-Phenylallylradikal bilden, sowie das $\alpha$-Methylstyrol-Dimer alleine als Regler eingesetzt werden können. Die erhaltenen Dispersionen enthalten jedoch große Mengen an schwerflüchtigen, teilweise nicht polymerisierbaren organischen Verbindungen. Der Gehalt an flüchtigen Kohlenwasserstoffen in den erhaltenen Dispersionen liegt selbst nach einer chemischen Desodorierung der Dispersion in der Regel oberhalb 3000 ppm und häufig auch oberhalb 10000 ppm. Unter chemischer Desodorierung versteht der Fachman eine durch Radikale ausgelöste Nachpolymerisation unter forcierten Polymerisationsbedingungen (siehe z.B. DE-A 44 35 423, DE-A 44 19 518, DE-A 44 35 422 und dort zitierte Literatur).

Die flüchtigen Kohlenwasserstoffe resultieren im wesentlichen aus dem Kohlenwasserstoff-Regler und niedermolekularen, nicht polymerisierbaren Reaktionsprodukten des Styrols und des Butadiens wie Ethylbenzol, 4-Vinylcyclohexen, 4-Phenylcyclohexen sowie nicht polymerisierten Monomeren, insbesondere Styrol (sog. Restmonomergehalt) und nicht polymerisierbare Verunreinigungen in den Einsatzstoffen. Hohe Restmonomergehalte treten insbesondere dann auf, wenn der Gehalt an Styrol in der zu polymerisierenden Monomermischung 40 Gew.-% und mehr beträgt und werden umso gravierender bei Styrolgehalten ab 45 Gew.-%, insbesondere ab 50 Gew.-% und besonders ab 55 Gew.-%. Zwar können hohe Gehalte an flüchtigen Bestandteilen durch anschliessende physikalische Desodorierung teilweise entfernt werden, jedoch steigt der Aufwand, nicht zuletzt der Zeitaufwand, und damit die Kosten mit zunehmendem Restmonomergehalt. Insbesondere die als Regler eingesetzten Kohlenwasserstoffe sind jedoch mit üblichen Methoden nicht mehr entfernbar. Da sich zudem die physikalische Desodorierung nachteilig auf die Qualität der Dispersion auswirken kann, ist ein geringer Gehalt an flüchtigen organischen Verunreinigungen vor Desodorierung auch unter Qualitätsaspekten wünschenswert.

Der vorliegenden Erfindung liegt somit die Aufgabe zugrunde, ein Verfahren zur Herstellung wässriger Styrol-Butadien-Polymerdispersionen in Gegenwart der oben erwähnten Kohlenwasserstoffe als Regler bereitzustellen, bei dem geringere Mengen an flüchtigen Bestandteilen entstehen.

Es wurde überraschenderweise gefunden, dass diese Aufgabe dadurch gelöst wird, dass man die Polymerisation nach einem Monomer zulaufverfahren durchführt, bei dem man die zu polymerisierenden Monomere innerhalb von 3 h der Polymerisationsreaktion zuführt.

Demnach betrifft die vorliegende Erfindung ein Verfahren zur Herstellung einer wässrigen Styrol-Butadien-Polymerdispersion durch radikalische wässrige Emulsionspolymerisation einer Monomermischung M, enthaltend

- 40 bis 80 Gew.-%, vorzugsweise 50 bis 79 Gew.-%, insbesondere 55 bis 79 Gew.-% Styrol als Monomer M1,

- 20 bis 60 Gew.-%, insbesondere 20 bis 49 Gew.-%, insbesondere 20 bis 44 Gew.-% Butadien als Monomer-M2 und
- 0 bis 40 Gew.-%, z.B. 1 bis 40 Gew.-% und insbesondere 1 bis 25 Gew.-%, jeweils bezogen auf 100 Gew.-% Monomere, von Styrol und Butadien verschiedene ethylenisch ungesättigte Comonomere M3,

nach einem Monomerzulaufverfahren in Gegenwart von 0,05 bis 0,5 Gew.-%, insbesondere 0,1 bis 0,4 Gew.-%, bezogen auf 100 Gew.-% Monomere, wenigstens eines Kohlenwasserstoffs KW mit 6 bis 20 C-Atomen, typischerweise mit 10 bis 18 C-Atomen, ausgewählt unter Kohlenwasserstoffen, die bei Abstraktion eines Wasserstoffatoms ein Pentadienyl- oder ein 1-Phenylallyl-Radikal bilden, und $\alpha$-Methylstyrol-Dimer, dadurch gekennzeichnet, dass man die zu polymerisierenden Monomere innerhalb von 3 h der Polymerisationsreaktion zuführt.

Die Durchführung des erfindungsgemäßen Verfahrens erfolgt nach einem Monomerzulaufverfahren. Hierunter versteht man, dass die Hauptmenge, üblicherweise wenigstens 70 %, vorzugsweise wenigstens 80 % und insbesondere wenigstens 90 % oder die Gesamtmenge der insgesamt zu polymerisierenden Monomere der Polymerisationsreaktion unter Polymerisationsbedingungen zugeführt werden. Unter dem Begriff Polymerisationsbedingungen versteht der Fachmann, dass der Polymerisationsreaktor eine zur Initiierung der Polymerisationsreaktion ausreichende Menge an Initiator enthält und der Reaktorinhalt eine Temperatur aufweist, bei welcher der Initiator eine zur Initiierung der Polymerisation ausreichende Zerfallsgeschwindigkeit aufweist. Die Zusammenhänge zwischen Temperatur und Zerfallsgeschwindigkeit sind dem Fachmann für die gängigen Polymerisationsinitiatoren hinreichend bekannt oder können in Routineexperimenten ermittelt werden.

Als Polymerisationsinitiatoren kommen grundsätzlich alle jene Verbindungen in Betracht, die bekanntermaßen zu Initiierung einer radikalischen Polymerisation, insbesondere von Butadien und Styrol, geeignet sind. Bevorzugt sind solche Initiatoren, die eine Peroxidgruppe aufweisen wie anorganische und organische Peroxide und Hydroperoxide. Besonders bevorzugt sind Wasserstoffperoxid und die Salze der Peroxodischwefelsäure, z.B. Natriumperoxodisulfat. Geeignet sind auch organische Hydroperoxide wie tert.-Butylhydroperoxid und Cumolhydroperoxid. Teilweise hat es sich bewährt, die vorgenannten Peroxide zusammen mit einem Reduktionsmittel und/oder einer Metallverbindung, die ihre Wertigkeitsstufe ändern kann, einzusetzen. Geeignete Reduktionsmittel sind Ascorbinsäure, Hydroxymethansulfinsäure, das Bisulfitaddukt von Aceton, Natriumsulfit oder -hydrogensulfit. Beispiele für geeignete Metallverbindungen sind die Salze und wasserlöslichen Komplexe des Eisens, Vanadiums oder des Kupfers. Ganz besonders bevorzugt werden im erfindungsgemäßen Verfahren Peroxodisulfate wie Natriumperoxodisulfat als Polymerisationsinitiatoren eingesetzt. Bevorzugte Initiatoren sind wasserlöslich.

Üblicherweise wird der Radikalstarter (Polymerisationsinitiator) in einer Menge von 0,2 bis 5 Gew.-%, insbesondere 0,5 bis 3 Gew.-%, bezogen auf die zu polymerisierenden Monomere eingesetzt. Die Zugabe der Radikalstarters erfolgt in der Regel nach Maßgabe seines Verbrauchs. Üblicherweise wird man daher wenigstens einen Teil oder die Gesamtmenge, vorzugsweise wenigstens 50 %, insbesondere wenigstens 80 % des Initiators im Verlauf der Polymerisationsreaktion, vorzugsweise parallel zur Monomerzugabe der Polymerisationsreaktion zuführen. Insbesondere legt man 2 bis 25 % und besonders bevorzugt 5 bis 20 % des Initiators im Reaktionsgefäss vor, erwärmt auf die gewünschte Polymerisationstemperatur und führt die verbleibende Initiatormenge parallel zur Monomerzugabe mit konstanter oder veränderlicher, z.B. steigender oder fallender Zulaufrate oder nach Maßgabe ihres Verbrauchs der Polymerisationsreaktion zu.

Der Initiator kann sowohl als solcher oder als Dispersion oder Lösung in einem geeigneten Lösungsmittel eingesetzt werden. Geeignete Lösungsmittel sind grundsätzlich alle üblichen Lösungsmittel, die den Inititator zu lösen vermögen. Bevorzugt sind Wasser und mit Wasser mischbare organische Lösungsmittel z.B. $C_1$-$C_4$-Alkohole oder deren Mischungen mit Wasser. Insbesondere setzt man den Initiator als wässrige Lösung ein. Vorzugsweise erfolgt die Beendigung der Initiatorzugabe mit Beendigung der Monomerzugabe oder spätestens 1 h, insbesondere spätestens 0,5 h nach Beendigung der Monomerzugabe.

Die Polymerisationstemperatur hängt naturgemäß von der Zerfallscharakteristik des Polymerisationsinitiators ab und beträgt vorzugsweise wenigstens 60°C, insbesondere wenigstens 70°C, besonders bevorzugt wenigstens 80°C und ganz besonders bevorzugt wenigstens 9.0°C. Üblicherweise wird man eine Polymerisationstemperatur von 120°C und vorzugsweise 110°C nicht überschreiten, um aufwendige Druckapparaturen zu vermeiden. Jedoch können bei geeigneter Wahl des Reaktionsgefäßes auch Temperaturen darüber angewendet werden. Bei der sogenannten Kaltfahrweise, d.h. bei Einsatz von Redoxinitiatorsystemen, ist es möglich auch bei geringeren Temperaturen zu polymerisieren, beispielsweise ab 10°C.

Erfindungsgemäß erfolgt das Verfahren in Gegenwart von der oben definierten Kohlenwasserstoffe KW als Polymerisationsregler. Jedoch können auch geringe Mengen anderer Verbindungen, die bekanntermaßen als Polymerisationsregler wirken, toleriert werden. Hierzu zählen beispielsweise die oben erwähnten Verbindungen mit Thiolgruppe, z.B. Alkylmerkaptane, sowie die in den EP-A 407 059 und DE-A 195 12 999 genannten Verbindungen. Ihr Anteil wird in der Regel weniger als 0,1 Gew.-% der zu polymerisierenden Monomere betragen und vorzugsweise einen Anteil von 50 Gewichtsteilen, vorzugsweise 20 Gewichtsteilen, bezogen auf 100 Gew.-Teile eingesetzten Kohlenwasserstoff KW nicht überschreiten.

Geeignete Kohlenwasserstoffe KW sind neben dem a-Methylstyrol-Dimer alle jene Verbindungen, die bei Abstraktion eines Wasserstoffatoms ein Pentadienyl- oder ein 1-Phenylallyl-Radikal ausbilden. Hierbei handelt es sich um Verbindungen, die

- entweder eine 1,4-Pentadienstruktur mit einem oder zwei Wasserstoffätomen am C3-Atom (Struktur A):

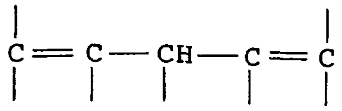

(A)

- oder eine 1,3-Pentadienstruktur mit einem oder zwei Wasserstoffatomen am C5-Atom (Struktur B) aufweisen,

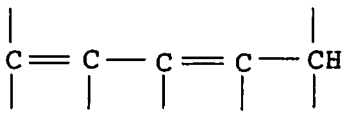

(B)

wobei eine der Doppelbindungen auch Bestandteil eines Phenylringes sein kann. In den Strukturen A und B deuten die senkrechten Striche offene Valenzen an, ohne jedoch eine Aussage über die Stereochemie der Doppelbindungen zu treffen. Die offenen Valenzen können mit Wasserstoff, einer Alkylgruppe oder einer Phenylgruppe abgesättigt sein oder es können je 2 offene Valenzen einen 5-oder 6-gliedrigen Carbocyclus bilden. Valenzen an zwei über eine Doppelbindung miteinander verbunden C-Atomen können zusammen mit den C-Atomen der Doppelbindung für einen Phenylring stehen.

Beispiele für Verbindungen mit der Struktur A sind 1,4-Dihydrobenzol, γ-Terpinen, Terpinolen und Norbornadien sowie weiterhin α-Ionon. Beispiele für Kohlenwasserstoffe mit Struktur B sind 1,3-Cyclohexadien, α-Terpinen und α-Phellandren. Der Begriff Kohlenwasserstoff KW umfasst auch Kohlenwasserstoffketone und Kohlenwasserstoffalkohole, die unter Wasserabspaltung eine Struktur A oder B ausbilden. Bevorzugte Kohlenwasserstoffregler sind γ-Terpinen, Terpinolen und α-Methylstyrol-Dimer, insbesondere Terpinolen.

Die Zugabe des Kohlenwasserstoffs KW kann zusammen mit den Monomeren oder getrennt davon erfolgen. In einer Ausgestaltung des erfindungsgemäßen Verfahrens wird die Gesamtmenge oder nahezu die Gesamtmenge des Kohlenwasserstoffs KW im Verlauf der Polymerisation zugeführt. In einer anderen bevorzugten Ausgestaltung des erfindungsgemäßen Verfahrens legt man einen Teil oder die Gesamtmenge des Kohlenwasserstoffs KW, vorzugsweise wenigstens 30 %, insbesondere wenigstens 50 % und besonders bevorzugt wenigstens 80 % des Kohlenwasserstoffs KW im Reaktionsgefäß vor. Durch diese Maßnahme lässt sich der unerwünschte Restmonomergehalt weiter absenken, ohne dass die übrigen Eigenschaften des Produkts nachteilig beeinflusst werden.

Außerdem hat es sich für die Verringerung flüchtiger Komponenten als vorteilhaft erwiesen, wenn man gegen Ende der Monomerzugabe, wenn wenigstens 70 % der zu polymerisierenden Monomere der Polymerisationsreaktion bereits zugeführt worden sind, die Konzentration des Butadiens im Monomerzulauf zumindest zeitweise um wenigstens 10 Gew.-%, vorzugsweise um wenistens 15 Gew.-%, z.B. um 10 bis 40 Gew.-% und insbesondere um 15 bis 30 Gew.-% anhebt.

Konzentrationsangaben in Monomerzuläufen beziehen sich hier und im Folgenden, sofern nichts anderes angegeben wird, auf die aktuelle Konzentration einer Komponente im Zulauf zum Zeitpunkt ihrer Zugabe. Angaben zu Monomerkonzentrationen in Gew.-% beziehen sich dabei auf die Gesamtmenge der zum fraglichen Zeitpunkt, bzw. im fraglichen Zeitintervall zugeführten Monomere. Demgegenüber beziehen sich Bruttoangaben auf die Gesamtmenge einer Komponente, die über die gesamte Dauer eines Zulaufs zugegeben wird. Sofern nichts anderes angegeben wird, ist unter dem Monomerzulauf die Summe aller Monomerzuläufe zu verstehen.

In der Regel beträgt das Zeitintervall, in welchem der Monomerzulauf eine erhöhte Butadienkonzentration aufweist, wenigstens 1 % und insbesondere wenigstens 2 % der Gesamtdauer des Monomerzulaufs und wird vorzugsweise eine Dauer von 20 %, insbesondere von 10 % nicht überschreiten und z.B. 1 bis 20 %, insbesondere 2 bis 10 % der Gesamtdauer des Monomerzulaufs betragen.

Vorzugsweise hebt man die Konzentration des Butadiens im Monomerzulauf auf wenigstens 50 Gew.-%, insbesondere auf wenigstens 55 Gew.-% an. Dementsprechend beträgt die Styrolkonzentration während dieses Zeitraums vorzugsweise nicht mehr als 50 Gew.-% und besonders bevorzugt nicht mehr als 45 Gew.-%.

Vorzugsweise erfolgt die Änderung der Zulaufzusammensetzung, wenn wenigstens 75 % und insbesondere wenigstens 80 % und vorzugsweise bevor 99 %, insbesondere bevor 95 % und besonders bevorzugt bevor 90 % der

zu polymerisierenden Monomere der Polymerisationsreaktion zugeführt worden sind.

Die Änderung der Zusammensetzung im Monomerzulauf kann kontinuierlich oder stufenweise in einem oder in mehreren, z.B. in 2, 3, 4, 5 oder 6 Schritten auf einen Endwert erfolgen oder innerhalb eines begrenzenten Zeitintervalls, das vor Beendigung der Monomerzugabe endet.

Die Änderung der Zusammensetzung des Monomerzulaufs kann in unterschiedlicher Weise gesteuert werden. Beispielsweise kann man Butadien und Styrol über getrennte Monomerzuläufe der Polymerisationsreaktion zuführen. Oder man führt eine Teilmenge einer Monomersorte, z.B. eine Teilmenge Butadien, über einen von der Restmenge der Monomere getrennten Zulauf der Polymerisationsreaktion zu. Eine Änderung der relativen Zulaufrate der Monomerzuläufe bewirkt dann in einfacher Weise eine Änderung der Bruttozusammensetzung des Monomerzulaufs. Selbstverständlich kann man die Monomere M1 und M2 und gegebenenfalls M3 auch über einen gemeinsamen Zulauf der Polymerisationsreaktion zuführen und die aktuelle Zusammensetzung des Zulaufs über geeignete Mischvorrichtungen, die ein kontinuierliches Mischen von Fluidströmen ermöglichen, voreinstellen. Geeignet sind dabei insbesondere statische Mischer.

In einer bevorzugten Ausführungsform A verringert man gegen Ende der Monomerzugabe die Zufuhrrate des Styrol-haltigen Monomerzulaufs bei konstanter Rate der Butadienzufuhr, und zwar vorzugsweise derart, dass der Anteil des Styrols im Monomerzulauf zum Zeitpunkt der Beendigung der Monomerzugabe weniger als 40 Gew.-%, insbesondere weniger als 20 Gew.-% und speziell 0 Gew.-% beträgt. Vorzugsweise erfolgt die Änderung, wenn 80%, insbesondere wenn 90 bis 99,5 % und besonders bevorzugt wenn 95 bis 99 % der Monomere zugeführt worden sind. In besonders einfacher Weise gelingt dies durch Beendigung der Styrolzufuhr bevor die Butadienzufuhr beendet ist, insbesondere wenn 90 bis 99,5 Gew.-% und besonders bevorzugt wenn 95 bis 99 Gew.-% des insgesamt zu polymerisierenden Butadiens zugeführt worden sind.

Umgekehrt kann man bei konstanter Rate der Styrolzugabe gegen Ende der Monomerzugabe die Rate der Butadienzufuhr auf einen Endwert oder zumindest in einem begrenzten Zeitintervall erhöhen (Ausführungsform B). Auch kann man beide Maßnahmen miteinander kombinieren. Hinsichtlich der Dauer der Phase erhöhter Butadienzufuhrrate gilt das oben gesagte.

Besonders bevorzugt ist als Sonderform der Ausführungsform B eine Ausführungsform B', bei der man eine Monomermischung, umfassend Styrol und Butadien und gegebenenfalls Monomere M3 in näherungsweise konstanter Monomerzusammensetzung, der Polymerisationsreaktion als Monomerzulauf Mz1 zuführt, wobei der Anteil des Butadiens in der Bruttozusammensetzung von Mz1 um 0,5 bis 20 Gew.-%, bezogen auf die Gesamtbutadienmenge in der zu polymerisierenden Monomerzusammensetzung verringert ist. Wenn wenigstens 70 %, vorzugsweise wenn 75 bis 99 % und insbesondere wenn 80 bis 95 % des Monomerzulaufs Mz1 der Polymerisationsreaktion zugeführt worden sind gibt man dann 0,5 bis 20 Gew.-%, vorzugsweise 1 bis 10 Gew.-% und insbesondere 2 bis 5 Gew.-% Butadien, bezogen auf die Gesamtmenge des insgesamt zu polymerisierenden Butadiens, als Zulauf Mz2 parallel mit der Restmenge des Monomerzulaufs Mz1 zur Polymerisationsreaktion. Zulauf Mz2 wird vorzugsweise weniger als 5 Gew.-% von Butadien verschiedene Monomere M2 und/oder M3 enthalten. Insbesondere enthält Zulauf Mz2 Butadien als alleiniges Monomer. Die Zugabe von Mz2 kann beginnend bei dem obengenannten Zeitpunkt bis zum Ende der Polymerisationsreaktion oder innerhalb eines kurzen Intervalls erfolgen. Die Gesamtdauer von Zulauf Mz2 beträgt vorzugsweise 1 bis 20 % und insbesondere 2 bis 10 % der Gesamtdauer von Mz1. Die Zuläufe Mz1 und Mz2 sind dabei als Stoffströme zu verstehen. Mz1 und Mz2 können sowohl über getrennte Einlässe in den Polymerisationsreaktor geführt werden. Ebenfalls ist es möglich, die den Stoffströmen Mz1 und Mz2 entsprechenden Monomermengen unter Verwendung geeigneter Mischvorrichtungen mittels einer gemeinsamen Zuleitung in den Reaktor zu führen.

Die Zugabe der Monomere kann sowohl in Form einer Mischung der Monomere als solche, als auch in Form einer wässrigen Emulsion der Monomere M1 bis M3 erfolgen, wobei letztere Vorgehensweise in der Regel bevorzugt wird. In der Ausführungsform B' wird man häufig den Butadien-reichen Zulauf Mz2 als reines Monomer bzw. Monomermischung und den Zulauf Mz1 als wässrige Emulsion der Polymerisationsreaktion zuführen.

Sofern man die Monomere der Polymerisationsreaktion als wässrige Emulsion zuführt, beträgt der Monomeranteil üblicherweise 30 bis 90 Gew.-%, insbesondere 40 bis 80 Gew.-% des Gesamtgewichts der Emulsion. Daneben enthält die Monomeremulsion in der Regel wenigstens einen Teil, vorzugsweise wenigstens 70 Gew.-%, insbesondere wenigstens 80 Gew.-% oder die Gesamtmenge der für eine Emulsionspolymerisation üblicherweise benötigten oberflächenaktiven Verbindungen.

Weiterhin hat es sich als vorteilhaft erwiesen, wenn man während der Polymerisation das Reaktionsgemisch einer intensiven Durchmischung unterwirft. Eine intensive Durchmischung kann man beispielsweise durch Einsatz von speziellen Rührern in Verbindung mit hohen Rührgeschwindigkeiten, durch Kombination von Rührern mit Statoren oder durch rasches Umwälzen, z.B. Umpumpen, der Reaktionsmischung über einen Bypass erreichen, wobei der Bypass seinerseits mit Vorrichtungen zur Erzeugung von Scherkräften, z.B. festen Einbauten wie Scher- oder Lochblechen, ausgestattet sein kann. Unter speziellen Rührern werden solche Rührer verstanden, die neben einer tangentialen Strömungskomponente auch ein axiales Strömungsfeld erzeugen. Derartige Rührer sind z.B. in der DE-A 197 11 022 beschrieben. Bevorzugt sind insbesondere Mehrstufenrührer. Beispiele für spezielle Rührer zur Erzeugung tangentialer

und axialer Strömungskomponenten sind Kreuzbalkenrührer, MIG® - und INTERMIG®-Rührer (Mehrstufen-Impuls-Gegenstromrührer und Interferenz-Mehrstufen-Impuls-Gegenstromrührer der Fa. EKATO), Axialflussturbinenrührer, wobei die vorgenannten Rührer einstufig oder mehrstufig aufgebaut und mit konventionellen Rührern kombiniert sein können, weiterhin Wendelrührer, vorzugsweise in wandgängiger Ausführung, Koaxialrührer, die einen ankerförmigen wandgängigen Rührer und einen ein oder mehrstufigen, schnelllaufenden Zentralrührer aufweisen, sowie Mehrfachblattrührer. Geeignet sind weiterhin die in der DE-C1 4421949, JP-A 292002, WO 93/22350 beschriebenen Rührertypen.

Ferner hat es sich als vorteilhaft erwiesen, das erfindungsgemäße Verfahren in einer Weise durchzuführen; dass die Teilchendichte der Polymerisatteilchen in der fertigen Dispersion einen Wert von etwa $5x10^{16}$ Teilchen pro kg Dispersion nicht unterschreitet und insbesondere im Bereich von $10^{17}$ bis 3 x $10^{19}$ Teilchen/kg Dispersion liegt. Die Teilchendichte hängt naturgemäß von dem mittleren Teilchendurchmesser der Polymerisatteilchen in der Dispersion ab. Bevorzugt wird der mittlere Teilchendurchmesser der Polymerisatteilchen unterhalb 300 nm und vorzugsweise im Bereich von 50 bis 200 nm liegen. Der mittlere Teilchendurchmesser ist wie üblich definiert als das Gewichtsmittel der Teilchengröße, wie sie mittels einer analytischen Ultrazentrifuge entsprechend der Methode von W. Scholtan und H. Lange, Kolloid-Z. und Z.-Polymere 250 (1972) Seiten 782 bis 796, bestimmt wird (siehe auch W. Mächtle in "Analytical Ultracentrifugation in Biochemistry and Polymer Science", S.E. Harding et al (Hrsg.), Cambridge: Royal Society of Chemistry, 1992, S. 147-175). Die Ultrazentrifugenmessung liefert die integrale Massenverteilung des Teilchendurchmessers einer Probe. Hieraus läßt sich entnehmen, wieviele Gewichtsprozent der Teilchen einen Durchmesser gleich oder unter einer bestimmten Größe haben. In ähnlicher Weise kann der gewichtsmittlere Teilchendurchmesser auch durch dynamische oder quasielastische Lichtstreuung von Laserlicht bestimmt werden (siehe H. Wiese in D. Distler (Hrsg.) "Wässrige Polymerdispersionen", Wiley-VCH, Weinheim 1999, S. 40 ff. und dort zit. Literatur). Maßnahmen zur Einstellung der Teilchendichte und des mittleren Teilchendurchmessers wässriger Polymerdispersionen sind dem Fachmann bekannt, z.B. aus N. Dezelic, J.J. Petres, G. Dezelic, Kolloid-Z. u. Z. Polymere, 1970, 242, S. 1142-1150. Sie kann sowohl durch die Menge an oberflächenaktiven Substanzen als auch durch Einsatz von Saatpolymeren, sog. Saatlatices, gesteuert werden, wobei hohe Emulgatorkonzentrationen und/oder hohe Konzentration an Saatpolymerteilchen in der Regel geringe Teilchendurchmesser bewirken.

In der Regel erweist es sich als vorteilhaft, die Emulsionspolymerisation in Gegenwart eines oder mehrerer sehr feinteiliger Polymere in Form wässriger Latices (sog. Saatlatices) durchzuführen. Vorzugsweise setzt man 0,1 bis 10 Gew.-%, vorzugsweise 0,1 bis 5 Gew.-% und insbesondere 0,2 bis 3 Gew.-% wenigstens eines Saatlatex (Feststoffgehalt des Saatlatex, bezogen auf Gesamtmonomermenge) ein. Der Saatlatex kann teilweise oder vollständig mit den Monomeren der Polymerisationsreaktion zugeführt werden. Vorzugsweise erfolgt jedoch das Verfahren mit vorgelegtem Saatlatex (Vorlagensaat). Der Latex weist in der Regel eine gewichtsmittlere Teilchengröße von 10 bis 200 nm, vorzugsweise 20 bis 100 nm und insbesondere 20 bis 50 nm auf. Seine konstituierenden Monomere sind beispielsweise Styrol, Methylmethacrylat, n-Butylacrylat und Mischungen davon, wobei der Saatlatex in untergeordnetem Maße auch ethylenisch ungesättigte Carbonsäuren, z.B. Acrylsäure und/oder Methacrylsäure und/oder deren Amide, vorzugsweise weniger als 10 Gew.-%, bezogen auf das Gesamtgewicht der Polymerisatteilchen im Saatlatex, einpolymerisiert enthalten kann.

Bei Einsatz eines Saatlatex wird man häufig so vorgehen, dass man den Saatlatex teilweise oder vollständig, vorzugsweise zu wenigstens 80 %, im Polymerisationsgefäß vorlegt, einen Teil des Initiators, vorzugsweise in den oben angegebenen Anteilen, und gegebenenfalls einen Teil der zu polymerisierenden Monomere zugibt und auf die gewünschte Polymerisationstemperatur erwärmt. Selbstverständlich kann das Einbringen des Initiators und des Saatlatex auch in umgekehrter Reihenfolge erfolgen. Vorzugsweise erfolgt die Zugabe der Monomere erst unter Polymerisationsbedingungen. Üblicherweise enthält die Vorlage neben dem Initiator und dem Saatlatex noch Wasser und gegebenenfalls einen Teil der oberflächenaktiven Verbindungen.

In der Regel wird man einen pH-Wert von 9 während der Polymerisation nicht überschreiten. Die Kontrolle des pH-Wertes erfolgt in einfacher Weise durch Zugabe eines Neutralisationsmittels im Verlauf der Polymerisationsreaktion. Geeignet sind z.B. Basen wie Alkalihydroxid, -carbonat oder -hydrogencarbonat, wenn der pH-Wert während der Polymerisation ansteigt. Dies ist beispielsweise bei Verwendung von Peroxodisulfaten als Polymerisationsinitiatoren der Fall.

Im Anschluss an die Polymerisationsreaktion erfolgt häufig noch eine Nachpolymerisation zur Verringerung der nicht umgesetzten Monomere in der Dispersion (sog. Restmonomere). Diese Nachpolymerisation wird häufig auch als chemische Desodorierung bezeichnet. Die chemische Desodorierung erfolgt in der Regel durch radikalische Nachpolymerisation, insbesondere unter Einwirkung von Redoxinitiatorsystemen, wie sie z.B. in der DE-A 44 35 423, DE-A 44 19 518 sowie in der DE-A 44 35 422 aufgeführt sind. Bevorzugt wird die Nachpolymerisation mit einem Redoxinitiatorsystem aus wenigstens einem organischen Peroxid und einem Reduktionsmittel, vorzugsweise einem anorganischen Sulfit oder dem Salz einer a-Hydroxysulfon- bzw. -sulfinsäure (Hydrogensulfitaddukt an Carbonylverbindung) durchgeführt. Die Mengen an Initiator für die Nachpolymerisation liegen in der Regel im Bereich von 0,1 bis 5 Gew.-%, vorzugsweise im Bereich von 0,2 bis 3 Gew.-% und insbesondere im Bereich von 0,3 bis 2 Gew.-%, bezogen auf die insgesamt polymerisierten Monomere. Bei Initiatorsystemen aus mehreren Komponenten, z.B. den Redoxinitiatorsystemen, beziehen sich die Mengenangaben auf die Gesamtmenge dieser Komponenten. Die chemische Desodorierung wird vorzugsweise bei Temperaturen im Bereich von 60 bis 100°C und insbesondere im Bereich von 70 bis 95°C durchgeführt. Die für die chemische Desodorierung verwendete Initiatormenge kann in einer Portion oder über einen längeren Zeitraum kontinuierlich mit konstanter oder veränderlicher, z.B. zunehmender Zulaufrate der Dispersion zugegeben werden. Die Zeitdauer der Zugabe liegt dann in der Regel im Bereich von 10 min bis 5 h und insbesondere im Bereich von 30 min bis 4 h. Die Gesamtdauer der chemischen Nachpolymerisation liegt in der Regel im Bereich von 15 min bis 5 h und vorzugsweise im Bereich von 30 min bis 4 h.

Die Herstellung wässriger Styrol-Butadien-Copolymerdispsersionen unter Verwendung von Terpinolen nach dem erfindungsgemäßen Verfahren liefert Dispersionen mit einem deutlich geringeren Anteil an Restmonomeren als die Verfahren des Standes der Technik zur Herstellung vergleichbarer Dispersionen. Nach der üblicherweise durchgeführten chemischen Desodorierung können Dispersionen erhalten werden, deren Gehalt an flüchtigen organischen Verbindungen deutlich unterhalb 10000 ppm, vorzugsweise unterhalb 3000 ppm, insbesondere unterhalb 2500 ppm, und speziell unterhalb 2000 ppm liegt.

Selbstverständlich kann man den Gehalt flüchtiger, organischer Bestandteile nach bekannten Verfahren noch weiter verringern. Dies kann in an sich bekannter Weise physikalisch durch destillative Entfernung (insbesondere über Wasserdampfdestillation) oder durch Abstreifen mit einem inerten Gas, oder durch Adsorption, (siehe R. Racz, Macromol. Symp. 155, 2000, S. 171-180) erreicht werden. Vorzugsweise wird man zunächst im Anschluss an die Polymerisationsreaktion eine chemische Desodorierung und anschließend eine physikalische Desodorierung durchführen. Beide Maßnahmen können auch gleichzeitig durchgeführt werden.

Hinsichtlich der Monomere M3 bestehen im erfindungsgemäßen Verfahren grundsätzlich keine Beschränkungen. Vielmehr richten sich Art und Menge der Monomere M3 in erster Linie nach dem gewünschten Einsatzzweck. Beispiele für geeignete Monomere M3 sind:

- monoethylenisch ungesättigte Monomere mit Säuregruppe wie Mono- und Dicarbonsäuren mit 3 bis 10 C-Atomen wie Acrylsäure, Methacrylsäure, Crotonsäure, Acrylamidoglykolsäure, Vinylessigsäure, Maleinsäure, Itaconsäure und die Halbester der Maleinsäure mit $C_1$-$C_4$-Alkanolen, ethylenisch ungesättigte Sulfonsäuren wie Vinylsulfonsäure, Allylsulfonsäure, Styrolsulfonsäure, 2-Acrylamidomethylpropansulfonsäure, und ethylenisch ungesättigte Phosphonsäuren, z.B. Vinylphosphonsäure, Allylphosphonsäure, Styrolphosphonsäure und 2-Acryl-amido-2-Methylpropanphosphonsäure und ihre wasserlöslichen Salze, beispielsweise ihre Alkalimetallsalze, vorzugsweise Acrylsäure und Methacrylsäure. Derartige Monomere können in den Monomeren M in einer Menge von bis zu 10 Gew.-%, z.B. 0,1 bis 10 Gew.-%, vorzugsweise 0,1 bis 4 Gew.-%, enthalten sein;

- Amide monoethylenisch ungesättigter Carbonsäuren, wie Acrylamid und Methacrylamid, sowie die N-(Hydroxy-$C_1$-$C_4$-alkyl)amide, vorzugsweise die N-Methylolamide ethylenisch ungesättigter Carbonsäuren, wie N-Methylolacrylamid und N-Methylolmethacrylamid. Derartige Monomere können in den Monomeren M in einer Menge von bis zu 10 Gew.-%, z.B. 0,1 bis 10 Gew.-%, vorzugsweise 0,1 bis 4 Gew.-%, enthalten sein;

- Hydroxyalkylester monoethylenisch ungesättigter Carbonsäuren, insbesondere Hydroxyethyl-, und Hydroxypropyl- und Hydroxybutylester, z.B. Hydroxyethylacrylat, Hydroxypropylacrylat, Hydroxyethylmethacrylat und Hydroxypropylmethacrylat. Derartige Monomere können in den Monomeren M in einer Menge von bis zu 10 Gew.-%, z.B. 0,1 bis 10 Gew.-%, vorzugsweise 0,5 bis 5 Gew.-%, enthalten sein;

- ethylenisch ungesättigten Nitrilen mit vorzugsweise 3 bis 10 C-Atomen wie Acrylnitril und Methacrylnitril. Derartige Monomere können in den Monomeren M in einer Menge von bis zu 30 Gew.-%, z.B. 1 bis 30 Gew.-%, vorzugsweise 5 bis 20 Gew.-%, enthalten sein;

- reaktive Monomere: Zu den reaktiven Monomeren zählen solche, die eine zur Vernetzung geeignete reaktive Funktionalität aufweisen. Hierzu zählen neben den vorgenannten ethylenisch ungesättigten Carbonsäuren, ihren N-Alkylolamiden und Hydroxyalkylestern Monomere, die eine Carbonylgruppe oder eine Epoxygruppe aufweisen, beispielsweise N-Diacetonacrylamid, N-Diacetonmethacrylamid, Acetylacetoxyethylacrylat und Acetylacetoxyethylmethacrylat, Glycidylacrylat und Glycidylmethacrylat. Derartige Monomere können in den Monomeren M in einer Menge von bis zu 10 Gew.-%, z.B. 0,5 bis 10 Gew.-% enthalten sein

- und vernetzende Monomere: Zu den vernetzenden Monomeren zählen solche, die wenigstens zwei nicht konjugierte ethylenisch ungesättigte Bindungen aufweisen, z.B. die Di- und Triacrylate bzw. -methacrylate von di- und trifunktionellen Alkoholen, z.B. Ethylenglykoldiacrylat, Diethylenglykoldiacrylat, Triethylenglykoldiacrylat, Butandioldiacrylat, Hexandioldiacrylat, Trimethylolpropantriacrylat und Tripropylenglykoldiacrylat. Derartige Monomere können in den Monomeren M in einer Menge von bis zu 2 Gew.-%, vorzugsweise nicht mehr als 1 Gew.-%, z.B. 0,01 bis 2 Gew.-%, vorzugsweise 0,01 bis 1 Gew.-%, enthalten sein. In einer bevorzugten Ausführungsform enthalten die

Monomere M kein vernetzendes Monomer einpolymerisiert.

Bevorzugte Monomere (Monomere M3') sind die monoethylenisch ungesättigten Mono- und Dicarbonsäuren mit 3 bis 10 C-Atomen, ihre Amide, ihre Hydroxy-$C_2$-$C_4$-Alkylester, ihre N-(Hydroxy-$C_1$-$C_4$-alkyl)amide sowie die vorgenannten ethylenisch ungesättigten Nitrile. Besonders bevorzugte Comonomere sind die monoethylenisch ungesättigten Mono- und Dicarbonsäuren, insbesondere Acrylsäure, Methacrylsäure und Itakonsäure.
In einer besonders bevorzugten Ausführungsform des erfindungsgemäßen Verfahrens enthält die zu polymerisierende Mischung der Monomere M

- 55 bis 70 Gew.-% Styrol,
- 29 bis 44 Gew.-% Butadien und
- 1 bis 10 Gew.-% wenigstens eines Monomers M3, vorzugsweise wenigstens eines Monomers M3' und insbesondere einer ethylenisch ungesättigten Mono- oder Dicarbonsäure.

In einer anderen bevorzugten Ausführungsform dieses Verfahrens ist ein Teil des Styrols, vorzugsweise 5 bis 20 Gew.-%, bezogen auf die Gesamtmonomermenge, durch Acrylnitril und/oder Methacrylnitril ersetzt. In dieser bevorzugten Ausführungsform enthält die zu polymerisierende Mischung z.B.

- 30 bis 65 Gew.-% Styrol,
- 29 bis 44 Gew.-% Butadien,
- 5 bis 25 Gew.-% Acrylnitril und/oder Methacrylnitril und
- 1 bis 10 Gew.-% einer ethylenisch ungesättigten Mono- oder Dicarbonsäure.

Im Hinblick auf die Verwendung der nach dem erfindungsgemäßen Verfahren hergestellten Polymerisate als Bindemittel in Beschichtungsmassen, z.B. in Papierstreichfarben oder in Anstrichmitteln, hat es sich als vorteilhaft erwiesen, wenn das aus der polymerisation resultierende Polymerisat eine Glasübergangstemperatur im Bereich von -20 bis +50°C und vorzugsweise im Bereich von 0 bis 30°C aufweist. Als Glasübergangstemperatur gilt hier die sogenannte mid-point-Temperatur, die nach ASTM 3418-82 mittels DSC bestimmt werden kann.
Die Glasübergangstemperatur kann über die eingesetzte Monomermischung M in bekannter Weise gesteuert werden.
Nach Fox (T.G. Fox, Bull. Am. Phys. Soc. (Ser. II) 1, 123 [1956] und Ullmanns Encyklopädie der Technischen Chemie, Weinheim (1980), S. 17, 18) gilt für die Glasübergangstemperatur von Mischpolymerisaten bei großen Molmassen in guter Nährung

$$\frac{1}{T_g} = \frac{X^1}{T_g{}^1} + \frac{X^2}{T_g{}^2} + \cdots\cdots \frac{X^n}{T_g{}^n}$$

wobei $X^1$, $X^2$, ..., $X^n$ die Massenbrüche der Monomeren 1, 2, ..., n und $T_g{}^1$, $T_g{}^2$, ..., $T_g{}^n$ die Glasübergangstemperaturen der jeweils nur aus einem der Monomeren 1, 2, ..., n aufgebauten Polymeren in Grad Kelvin bedeuten. Letztere sind z.B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed., J. Wiley, New York 1989 bekannt. Polystyrol besitzt danach eine Tg von 380 K und Polybutadien eine Tg von 171 K bzw. 166 K.
Die folgenden Beispiele sollen die Erfindung erläutern, ohne sie jedoch einzuschränken.
Die Bestimmung der Teilchengröße des Polymerisats erfolgte durch Lichtstreuung nach ISO 13321 mit einem Malvern Autosizer 2C an 0,01 gew.-%igen Proben. Die Lichtdurchlässigkeit wurde an 0,01 gew.-%igen Proben bei einer Küvettenlänge von 2,5 cm gegen reines Wasser als Referenz bestimmt. Die Bestimmung der Glasübergangstemperatur erfolgte mittels DSC nach der mid-point Methode.
Die Bestimmung restflüchtiger Anteile erfolgte durch gaschromatographische Analyse.

Beispiel 1

In einem Polymerisationsgefäß legte man 360 g Wasser, 91 g einer 33 gew.-%igen Polymersaat (Polystyrollatex, $d_{50}$ 30 nm) sowie 10% der Initiatorlösung (Zulauf 2) vor und erwärmte auf 95°C.
Dann gab man über zwei getrennte Zuläufe zeitgleich beginnend innerhalb 2,5 h die Restmenge der Monomeremulsion und die Restmenge der Initiatorlösung unter Beibehaltung der Temperatur in das Polymerisationsgefäß. Nach Beendigung der Monomerzugabe kühlte man auf 90°C, gab dann innerhalb 2 h zeitgleich beginnend eine wässrige

Lösung von 8,5 g tert.-Butylhydroperoxid in 90 g Wasser sowie eine Lösung von 3,9 g Aceton und 15,7 g einer 40 gew.-%igen, wässrigen Natriumdisulfit-Lösung in 84 g Wasser unter Beibehaltung der Temperatur zu. Anschließend gab man 24,6 g einer 25 gew.-% Natronlauge zu und kühlte auf Raumtemperatur ab.

Zulauf 1:

| | |
|---|---|
| 540,0 g | entionisiertes Wasser |
| 33,6 g | Emulgatorlösung |
| 4,7 g | Terpinolen (95 gew.-%ig) |
| 950,0 g | Styrol |
| 495,0 g | Butadien |
| 45,0 g | Acrylsäure |
| 12,0 g | 25 gew.-%ige wässrige Natronlauge |

Zulauf 2:

15,0 g Natriumperoxodisulfat in 230 g Wasser

Emulgatorlösung: Mischung aus 3 Gew.-Teilen einer wässrigen 45 gew.-%igen Lösung des Natriumsalzes des disulfonierten Monododecyldiphenylethers (DOWFAX 2A1, Dow Chemical) und 7 Gew.-Teilen einer wässrigen, 15 gew.-%igen Natriumdodecylsulfat-Lösung

Der Feststoffgehalt der Dispersion lag bei etwa 52 Gew.-%. Die Lichtdurchlässigkeit betrug 73%. Die gewichtsmittlere Teilchengröße $d_{50}$ lag bei 122 nm. Der pH-Wert lag bei 6,3 und die Glasübergangstemperatur $T_g$ betrug 27°C.

Beispiel 2

In einem Polymerisationsgefäß legte man 360 g Wasser, 91 g einer 33 gew.-%igen Polymersaat (Polystyrollatex, $d_{50}$ 30 nm) sowie 10% der Initiatorlösung (Zulauf 2) vor und erwärmte auf 95°C.

Dann gab man über zwei getrennte Zuläufe zeitgleich beginnend innerhalb 2,5 h die Restmenge der Monomeremulsion und die Restmenge der Initiatorlösung unter Beibehaltung der Temperatur in das Polymerisationsgefäß. 2 h nach Beginn von Zulauf 1 gab man innerhalb von 5 min 30 g Butadien in das Reaktionsgefäß. Nach Beendigung der Monomerzugabe kühlte man auf 90°C, gab dann innerhalb 2 h zeitgleich beginnend eine wässrige Lösung von 8,5 g tert.-Butylhydroperoxid in 90 g Wasser sowie eine Lösung von 3,9 g Aceton und 15,7 g einer 40 gew.-%igen, wässrigen Natriumdisulfit-Lösung in 84 g Wasser unter Beibehaltung der Temperatur zu. Anschließend gab man 17 g einer 25 gew.-% Natronlauge zu und kühlte auf Raumtemperatur ab.

Zulauf 1:

| | |
|---|---|
| 540,0 g | entionisiertes Wasser |
| 36,6 g | Emulgatorlösung |
| 5,0 g | Terpinolen (90 gew.-%ig) |
| 950,0 g | Styrol |
| 495,0 g | Butadien |
| 45,0 g | Acrylsäure |
| 12,0 g | 25 gew.-%ige wässrige Natronlauge |

Zulauf 2:

15,0 g Natriumperoxodisulfat in 250 g Wasser

Emulgatorlösung: Mischung aus 4 Gew.-Teilen einer wässrigen 45 gew.-%igen Lösung des Natriumsalzes des disulfonierten Monododecyldiphenylethers (DOWFAX 2A1, Dow Chemical) und 6 Gew.-Teilen einer wässrigen, 15 gew.-%igen.Natriumdodecylsulfat-Lösung

Der Feststoffgehalt der Dispersion lag bei etwa 50 Gew.-%. Die Lichtdurchlässigkeit betrug 72%. Die gewichtsmittlere Teilchengröße $d_{50}$ lag bei 121 nm. Der pH-Wert lag bei 5,8 und die Glasübergangstemperatur $T_g$ betrug 26°C.

Beispiel 3

Auf die in Beispiel 1 angegebene Weise wurde unter ansonsten identischen Bedingungen die folgende Monomeremulsion (Zulauf 1) polymerisiert.

Zulauf 1:

| | |
|---|---|
| 540,0 g | entionisiertes Wasser |
| 36,6 g | Emulgatorlösung (siehe Beispiel 2) |
| 4,2 g | Terpinolen (90 gew.-%ig) |
| 950,0 g | Styrol |
| 495,0 g | Butadien |
| 45,0 g | Acrylsäure |
| 12,0 g | 25 gew.-%ige wässrige Natronlauge |

Der Feststoffgehalt der Dispersion lag bei etwa 56 Gew.-%. Die Lichtdurchlässigkeit betrug 73%. Die gewichtsmittlere Teilchengröße $d_{50}$ lag bei 116 nm. Der pH-Wert lag bei 5,6 und die Glasübergangstemperatur Tg betrug 27 °C.

Beispiel 4

Auf die in Beispiel 2 angegebene Weise wurde unter ansonsten identischen Bedingungen die folgende Monomeremulsion (Zulauf 1) polymerisiert:

Zulauf 1:

| | |
|---|---|
| 540,0 g | entionisiertes Wasser |
| 36,6 g | Emulgatorlösung (wie in Beispiel 2) |
| 4,2 g | Terpinolen (90 gew.-%ig) |
| 950,0 g | Styrol |
| 495,0 g | Butadien |
| 45,0 g | Acrylsäure |
| 12,0 g | 25 gew.-%ige wässrige Natronlauge |

Der Feststoffgehalt der Dispersion lag bei etwa 52 Gew.-%. Die Lichtdurchlässigkeit betrug 70%. Die gewichtsmittlere Teilchengröße $d_{50}$ lag bei 126 nm. Der pH-Wert lag bei 5,6 und die Glasübergangstemperatur Tg betrug 28°C.

Beispiel 5

In einem Polymerisationsgefäß legte man 330 g Wasser, 180 g einer 33 gew.-%igen Polymersaat (Polystyrollatex, $d_{50}$ 30 nm) sowie 10% der Initiatorlösung (Zulauf 2) vor und erwärmte auf 90°C.

Dann gab man über zwei getrennte Zuläufe zeitgleich beginnend innerhalb 3 h die Restmenge der Monomeremulsion und die Restmenge der Initiatorlösung unter Beibehaltung der Temperatur in das Polymerisationsgefäß. Nach

Beendigung der Monomerzugabe kühlte man auf 85°C, gab dann innerhalb 2 h zeitgleich beginnend eine wässrige Lösung von 8,5 g tert.-Butylhydroperoxid in 90 g Wasser sowie eine Lösung von 3,9 g Aceton und 15,7 g einer 40 gew.-%igen, wässrigen Natriumdisulfit-Lösung in 84 g Wasser unter Beibehaltung der Temperatur zu. Anschließend gab man 24,6 g einer 25 gew.-%iger Natronlauge zu und kühlte auf Raumtemperatur ab.

Zulauf 1:

| | |
|---|---|
| 540,0 g | entionisiertes Wasser |
| 36,6 g | Emulgatorlösung (siehe Beispiel 1) |
| 5,0 g | Terpinolen (90 gew.-%ig) |
| 800,0 g | Styrol |
| 640,0 g | Butadien |
| 45,0 g | Acrylsäure |
| 12,0 g | 25 gew.-%ige wässrige Natronlauge |

Zulauf 2:

15 g Natriumperoxodisulfat in 210 g Wasser

Der Feststoffgehalt der Dispersion lag bei etwa 52 Gew.-%. Die Lichtdurchlässigkeit betrug 83%. Die gewichtsmittlere Teilchengröße $d_{50}$ lag bei 107 nm. Der pH-Wert lag bei 5,7 und die Glasübergangstemperatur Tg betrug 6°C.

Beispiel 6

Man verfuhr wie in Beispiel 5, jedoch gab man Monomerzulauf 1 innerhalb von 2,5 h in den Polymerisationsreaktor.

Der Feststoffgehalt der Dispersion lag bei etwa 52 Gew.-%. Die Lichtdurchlässigkeit betrug 83%. Die gewichtsmittlere Teilchengröße $d_{50}$ lag bei 107 nm. Der pH-Wert lag bei 5,7 und die Glasübergangstemperatur Tg betrug 6°C.

Beispiel 7

In einem Polymerisationsgefäß legte man 360 g Wasser, 91 g einer 33 gew.-%igen Polymersaat (Polystyrollatex, $d_{50}$ 30 nm), 3,2 g Terpinolen sowie 10% der Initiatorlösung (Zulauf 2) vor und erwärmte auf 90°C.

Dann gab man über zwei getrennte Zuläufe zeitgleich beginnend innerhalb 2,5 h die Restmenge der Monomeremulsion und die Restmenge der Initiatorlösung unter Beibehaltung der Temperatur in das Polymerisationsgefäß. 2 h nach Zulaufbeginn gab man zusätzlich 30 g Butadien innerhalb von 5 min in das Reaktionsgefäß. Nach Beendigung der Monomerzugabe kühlte man auf 85°C, gab dann innerhalb 2 h zeitgleich beginnend eine wässrige Lösung von 8,5 g tert.-Butylhydroperoxid in 90 g Wasser sowie eine Lösung von 3,9 g Aceton und 15,7 g einer 40 gew.-%igen, wässrigen Natriumdisulfit-Lösung in 84 g Wasser unter Beibehaltung der Temperatur zu. Anschließend gab man 24,6 g einer 25 gew.-% Natronlauge zu und kühlte auf Raumtemperatur ab.

Zulauf 1:

| | |
|---|---|
| 540,0 g | entionisiertes Wasser |
| 36,6 g | Emulgatorlösung (siehe Beispiel 1) |
| 800,0 g | Styrol |
| 615,0 g | Butadien |
| 45,0 g | Acrylsäure |
| 12,0 g | 25 gew.-%ige wässrige Natronlauge |

Zulauf 2:

15 g Natriumperoxodisulfat in 210 g Wasser

Der Feststoffgehalt der Dispersion lag bei etwa 50 Gew.-%. Die Lichtdurchlässigkeit betrug 73%. Die gewichtsmittlere Teilchengröße $d_{50}$ lag bei 123 nm. Der pH-Wert lag bei 5,5 und die Glasübergangstemperatur Tg betrug 7°C.

Vergleichsbeispiel VB 1:

In einem Polymerisationsgefäß legte man 330 g Wasser, 180 g einer 33 gew.-%igen Polymersaat (Polystyrollatex, $d_{50}$ 30 nm) sowie 10% der Initiatorlösung (Zulauf 2) vor und erwärmte auf 85°C.

Dann gab man über zwei getrennte Zuläufe zeitgleich beginnend innerhalb 6 h die Restmenge der Monomeremulsion und die Restmenge der Initiatorlösung unter Beibehaltung der Temperatur in das Polymerisationsgefäß. Nach Beendigung der Monomerzugabe kühlte man auf 70°C, gab dann innerhalb 2 h zeitgleich beginnend eine wässrige Lösung von 8,5 g tert.-Butylhydroperoxid in 90 g Wasser sowie eine Lösung von 3,9 g Aceton und 15,7 g einer 40 gew.-%igen, wässrigen Natriumdisulfit-Lösung in 84 g Wasser unter Beibehaltung der Temperatur zu. Anschließend gab man 24,6 g einer 25 gew.-% Natronlauge zu und kühlte auf Raumtemperatur ab.

Zulauf 1:

| | |
|---|---|
| 540,0 g | entionisiertes Wasser |
| 36,6 g | Emulgatorlösung (siehe Beispiel 1) |
| 5,0 g | Terpinolen |
| 800,0 g | Styrol |
| 645,0 g | Butadien |
| 45,0 g | Acrylsäure |
| 12,0 g | 25 gew.-%ige wässrige Natronlauge |

Zulauf 2:

15 g Natriumperoxodisulfat in 210 g Wasser

Der Feststoffgehalt der Dispersion lag bei etwa 50 Gew.-%. Die Lichtdurchlässigkeit betrug 82%. Die gewichtsmittlere Teilchengröße $d_{50}$ lag bei 104 nm. Der pH-Wert lag bei 6,3 und die Glasübergangstemperatur Tg betrug 5 °C.

Vergleichsbeispiel VB 2

In einem Polymerisationsgefäß legte man 330 g Wasser, 180 g einer 33 gew.-%igen Polymersaat (Polystyrollatex, $d_{50}$ 30 nm) sowie 10% der Initiatorlösung (Zulauf 2) vor und erwärmte auf 85°C.

Dann gab man über zwei getrennte Zuläufe zeitgleich beginnend innerhalb 6 h die Restmenge der Monomeremulsion und die Restmenge der Initiatorlösung unter Beibehaltung der Temperatur in das Polymerisationsgefäß. 5,5 h nach Zulaufbeginn gab man zusätzlich 30 g Butadien innerhalb von 5 min in das Reaktionsgefäß. Nach Beendigung der Monomerzugabe kühlte man auf 85°C, gab dann innerhalb 2 h zeitgleich beginnend eine wässrige Lösung von 8,5 g tert.-Butylhydroperoxid in 90 g Wasser sowie eine Lösung von 3,9 g Aceton und 15,7 g einer 40 gew.-%igen, wässrigen Natriumdisulfit-Lösung in 84 g Wasser unter Beibehaltung der Temperatur zu. Anschließend gab man 24,6 g einer 25 gew.-% Natronlauge zu und kühlte auf Raumtemperatur ab.

Monomerzulauf, Initatorzulauf und Emulgatorlösung waren mit denen von Beispiel 5 identisch.

Der Feststoffgehalt der Dispersion lag bei etwa 49,9 Gew.-%. Die Lichtdurchlässigkeit betrug 80,3%. Die gewichtsmittlere Teilchengröße $d_{50}$ lag bei 106 nm. Der pH-Wert lag bei 5,9 und die Glasübergangstemperatur Tg betrug 6°C.

Vergleichsbeispiel VB 3:

In einem Polymerisationsgefäß legte man 330 g Wasser, 180 g einer 33 gew.-%igen Polymersaat (Polystyrollatex, $d_{50}$ 30 nm), 5,0 g Terpinolen (90 gew.-%ig) sowie 10% der Initiatorlösung (Zulauf 2) vor und erwärmte auf 85°C.

Dann gab man über zwei getrennte Zuläufe zeitgleich beginnend innerhalb 6 h die Restmenge der Monomeremulsion und die Restmenge der Initiatorlösung unter Beibehaltung der Temperatur in das Polymerisationsgefäß. Nach Beendigung der Monomerzugabe kühlte man auf 70°C, gab dann innerhalb 2 h zeitgleich beginnend eine wässrige Lösung von 8,5 g tert.-Butylhydroperoxid in 90 g Wasser sowie eine Lösung von 3,9 g Aceton und 15,7 g einer 40 gew.-%igen, wässrigen Natriumdisulfit-Lösung in 84 g Wasser unter Beibehaltung der Temperatur zu. Anschließend gab man 24,6 g einer 25 gew.-% Natronlauge zu und kühlte auf Raumtemperatur ab.

Zulauf 1:

| | |
|---|---|
| 540,0 g | entionisiertes Wasser |
| 36,6 g | Emulgatorlösung (siehe Beispiel 1) |
| 800,0 g | Styrol |
| 640,0 g | Butadien |
| 45,0 g | Acrylsäure |
| 12,0 g | 25 gew.-%ige wässrige Natronlauge |

Zulauf 2:

| | |
|---|---|
| 15 g | Natriumperoxodisulfat in 210 g Wasser |

Der Feststoffgehalt der Dispersion lag bei etwa 50,7 Gew.-%. Die Lichtdurchlässigkeit betrug 81,1%. Die gewichtsmittlere Teilchengröße $d_{50}$ lag bei 103 nm. Der pH-Wert lag bei 6,1 und die Glasübergangstemperatur Tg betrug 5°C.

Tabelle 1: Anteile flüchtiger organischer Komponenten der erhaltenen Dispersionen vor physikalischer Desodorierung (in ppm, bezogen auf das Gesamtgewicht der Dispersion):

| Beispiel | 1 | 2 | 3 | 4 | 5 |
|---|---|---|---|---|---|
| Butadien | 20 | 80 | 50 | 80 | 40 |
| VCH | 220 | 70 | 180 | 270 | 140 |
| Ethylbenzol | 20 | 10 | 20 | 20 | 40 |
| Styrol | 2500 | 900 | 1600 | 690 | 2400 |
| PCH | 40 | 30 | 50 | 30 | 80 |
| Terpinolen | 440 | 470 | 390 | 400 | 450 |
| Σ | 3240 | 1560 | 2290 | 1490 | 3150 |

| Beispiel | 6 | 7 | VB 1 | VB 2 | VB 3 |
|---|---|---|---|---|---|
| Butadien | 40 | <10 | 30 | 80 | 40 |
| VCH | 130 | 70 | 80 | 70 | 60 |
| Ethylbenzol | 20 | 20 | 20 | 20 | 20 |
| Styrol | 1400 | 330 | 3890 | 2700 | 2900 |
| PCH | 100 | 40 | 60 | 40 | 50 |
| Terpinolen | 460 | 170 | 460 | 440 | 260 |
| Σ | 1250 | 640 | 4540 | 3350 | 3330 |

**Patentansprüche**

**1.** Verfahren zur Herstellung einer wässrigen Styrol-Butadien-Polymerdispersion durch radikalische wässrige Emulsionspolymerisation einer Monomermischung M, enthaltend

- 40 bis 80 Gew.-% Styrol als Monomer M1,
- 20 bis 60 Gew.-% Butadien als Monomer M2 und
- 0 bis 40 Gew.-%, bezogen auf 100 Gew.-% Monomere, von Styrol und Butadien verschiedene ethylenisch ungesättigte Comonomere M3,

nach einem Monomerzulaufverfahren in Gegenwart von 0,05 bis 0,5 Gew.-%, bezogen auf 100 Gew.-% Monomere, wenigstens eines Kohlenwasserstoffs KW ausgewählt unter Verbindungen mit 6 bis 20 C-Atomen, die bei Abstraktion eines Wasserstoffatoms ein Pentadienyl- oder ein 1-Phenylallyl-Radikal bilden, und dem α-Methylstyrol-Dimer, **dadurch gekennzeichnet, dass** man die zu polymerisierenden Monomere innerhalb von 3 h der Polymerisationsreaktion zuführt.

**2.** Verfahren nach Anspruch 1, **dadurch gekennzeichnet, dass** man wenigstens 30 % des Kohlenwasserstoffs KW im Polymerisationsgefäß vorlegt und die Restmenge des Kohlenwasserstoffs KW der Polymerisationsreaktion in ihrem Verlauf zuführt.

**3.** Verfahren nach einem der vorhergehenden Ansprüche, **dadurch gekennzeichnet, dass** der Kohlenwasserstoff KW ausgewählt ist unter Terpinolen, γ-Terpinen und α-Methylstyrol-Dimer.

4. Verfahren nach einem der vorhergehenden Ansprüche, **dadurch gekennzeichnet, dass** der Polymerisationsinitiator ausgewählt ist unter anorganischen und organischen Verbindungen mit einer Peroxid-Gruppe.

5. Verfahren nach einem der vorhergehenden Ansprüche, **dadurch gekennzeichnet, dass** man die Polymerisation in Gegenwart von 0,1 bis 10 Gew.-% wenigstens eines Saat-Latex durchführt.

6. Verfahren nach einem der vorhergehenden Ansprüche, **dadurch gekennzeichnet, dass** man zu einem Zeitpunkt, wenn wenigstens 70 % der zu polymerisierenden Monomere der Polymerisationsreaktion zugeführt worden sind, die Konzentration des Butadiens im Monomerzulauf für einen Zeitraum von wenigstens 1 % der Gesamtzulaufdauer um wenigstens 10 Gew.-%, bezogen auf Monomere im Zulauf, anhebt.

7. Verfahren nach Anspruch 6, **dadurch gekennzeichnet, dass** die Konzentration des Butadiens im Monomerzulauf in diesem Zeitraum auf wenigstens 50 Gew.-% angehoben wird.

8. Verfahren nach Anspruch 6 oder 7, **dadurch gekennzeichnet, dass** man eine Monomermischung umfassend Styrol, Butadien und gegebenenfalls Monomere M3 der Polymerisationsreaktion als Monomerzulauf Mz1 zuführt und dann, wenn wenigstens 70 % des Monomerzulaufs Mz1 der Polymerisationsreaktion zugeführt worden sind, 0,5 bis 20 Gew.-% Butadien, bezogen auf die Gesamtmenge des insgesamt zu polymerisierenden Butadiens als Zulauf Mz2 parallel zum Monomerzulauf Mz1 der Polymerisationsreaktion zuführt.

9. Verfahren nach Anspruch 8, **dadurch gekennzeichnet, dass** man den gesamten Zulauf Mz2 innerhalb eines Zeitintervalls, das 1 bis 20 %, der Dauer von Zulauf Mz1 beträgt, zuführt.

10. Verfahren nach Anspruch 6 oder 7, **dadurch gekennzeichnet, dass** der Gewichtsanteil des Styrols im Monomerzulauf zum Zeitpunkt der Beendigung der Monomerzufuhr weniger als 20 Gew.-% beträgt.

11. Verfahren nach Anspruch 10, **dadurch gekennzeichnet, dass** man die Zufuhr des Styrols vor Beendigung der Butadienzufuhr beendet.

12. Verfahren nach einem der vorhergehenden Ansprüche, **dadurch gekennzeichnet, dass** die von Styrol und Butadien verschiedenen Monomere M3 ausgewählt sind unter monoethylenisch ungesättigten Mono- und Dicarbonsäuren mit 3 bis 10 C-Atomen, deren Amiden, deren Hydroxy-$C_2$-$C_4$-alkylestern, deren N-(Hydroxy-$C_1$-$C_4$-alkyl)amiden und ethylenisch ungesättigten Nitrilen.

13. Verfahren nach einem der vorhergehenden Ansprüche, **dadurch gekennzeichnet, dass** die zu polymerisierende Monomermischung

- 55 bis 70 Gew.-% Styrol,
- 29 bis 44 Gew.-% Butadien und
- 1 bis 10 Gew.-% wenigstens eines Monomers M3 enthält.

14. Verfahren zur Verringerung restflüchtiger Anteile in wässrigen styrol-Butadien-Polymerdispersionenen, die

- 40 bis 80 Gew.-% Styrol als Monomer M1,
- 20 bis 60 Gew.-% Butadien als Monomer M2 und
- 0 bis 40 Gew.-%, bezogen auf 100 Gew.-% Monomere, von Styrol und Butadien verschiedene ethylenisch ungesättigte Comonomere M3,

einpolymerisiert enthalten, und die nach der Methode der radikalischen wässrigen Emulsionspolymerisation der Monomere M1 bis M3 nach einem Monomerzulaufverfahren in Gegenwart von 0,05 bis 0,5 Gew.-%, bezogen auf 100 Gew.-% Monomere, wenigstens eines Kohlenwasserstoffs KW gemäß Definition in Anspruch 1, hergestellt werden, **dadurch gekennzeichnet, dass** man die zu polymerisierenden Monomere innerhalb von 3 h der Polymerisationsreaktion zuführt.

## Claims

1. A process for preparing an aqueous styrene-butadiene polymer dispersion by free-radical aqueous emulsion polymerization of a monomer mixture M comprising

- from 40 to 80% by weight of styrene as monomer M1,
- from 20 to 60% by weight of butadiene as monomer M2, and
- from 0 to 40% by weight, based on 100% by weight of monomers, of ethylenically unsaturated comonomers M3 other than styrene and butadiene,

by a monomer feed technique in the presence of from 0.05 to 0.5% by weight, based on 100% by weight of monomers, of at least one hydrocarbon HC selected from compounds having from 6 to 20 carbon atoms, which on abstraction of a hydrogen atom form a pentadienyl or 1-phenylallyl radical and from α-methylstyrene dimer, which comprises supplying the monomers to be polymerized to the polymerization reaction within 3 hours.

**2.** The process according to claim 1, wherein at least 30% of the hydrocarbon HC is included in the initial charge to the polymerization vessel and the remainder of the hydrocarbon HC is supplied to the polymerization reaction during its course.

**3.** The process according to either of the preceding claims, wherein the hydrocarbon HC is selected from terpinolene, γ-terpinene, and α-methylstyrene dimer.

**4.** The process according to any of the preceding claims, wherein the polymerization initiator is selected from organic and inorganic compounds containing a peroxide group.

**5.** The process according to any of the preceding claims, wherein the polymerization is conducted in the presence of from 0.1 to 10% by weight of at least one seed latex.

**6.** The process according to any of the preceding claims, wherein at a time when at least 70% of the monomers to be polymerized have been supplied to the polymerization reaction the concentration of butadiene in the monomer feed is raised for a period of at least 1% of the total feed duration by at least 10% by weight, based on monomers in the feed.

**7.** The process according to claim 6, wherein the concentration of the butadiene in the monomer feed is raised in said period to at least 50% by weight.

**8.** The process according to claim 6 or 7, wherein a monomer mixture comprising styrene, butadiene, and, if appropriate, monomers M3 is supplied to the polymerization reaction as monomer feed Mf1 and when at least 70% of the monomer feed Mf1 has been supplied to the polymerization reaction from 0.5 to 20% by weight of butadiene, based on the total amount of the total butadiene to be polymerized, is supplied to the polymerization reaction as feed Mf2 in parallel to the monomer feed Mf1.

**9.** The process according to claim 8, wherein the total feed Mf2 is supplied within a time interval which is from 1 to 20% of the duration of feed Mf1.

**10.** The process according to claim 6 or 7, wherein the weight fraction of styrene in the monomer feed at the time when the supply of monomer is ended is less than 20% by weight.

**11.** The process according to claim 10, wherein the supply of the styrene is ended before the ending of the butadiene supply.

**12.** The process according to any of the preceding claims, wherein the monomers M3 other than styrene and butadiene are selected from monoethylenically unsaturated monocarboxylic and dicarboxylic acids having from 3 to 10 carbon atoms, their amides, their $C_2$-$C_4$ hydroxyalkyl esters, their N-(hydroxy-$C_1$-$C_4$ alkyl)amides, and ethylenically unsaturated nitriles.

**13.** The process according to any of the preceding claims, wherein the monomer mixture to be polymerized comprises

- from 55 to 70% by weight of styrene,
- from 29 to 44% by weight of butadiene, and
- from 1 to 10% by weight of at least one monomer M3.

**14.** A method of reducing the amount of residual volatiles in aqueous styrene-butadiene polymer dispersions comprising in copolymerized form

- from 40 to 80% by weight of styrene as monomer M1,
- from 20 to 60% by weight of butadiene as monomer M2, and
- from 0 to 40% by weight, based on 100% by weight of monomers, of ethylenically unsaturated comonomers M3 other than styrene and butadiene,

and prepared by the method of free-radical aqueous emulsion polymerization of the monomers M1 to M3 by a monomer feed technique in the presence of from 0.05 to 0.5% by weight, based on 100% by weight of monomers, of at least one hydrocarbon HC as defined in claim 1, which comprises supplying the monomers to be polymerized to the polymerization reaction within 3 hours.

## Revendications

**1.** Procédé pour la préparation d'une dispersion aqueuse de polymère styrène-butadiène par polymérisation d'émulsion aqueuse radicalaire d'un mélange monomère M, contenant :

- 40 à 80% en poids de styrène en tant que monomère M1,
- 20 à 60% en poids de butadiène en tant que monomère M2 et
- 0 à 40% en poids, par rapport à 100% en poids de monomères, de comonomères M3 éthyléniquement insaturés et différents de styrène et de butadiène,

selon un procédé d'addition de monomères en présence de 0,05 à 0,5 % en poids, par rapport à 100% en poids de monomères, au moins d'un hydrocarbure HC sélectionné parmi des composés avec 6 à 20 atomes de carbone qui, en cas d'abstraction d'un atome d'hydrogène, forment un radical pentadiénylique ou 1-phenylallylique et le dimère $\alpha$-méthylstyrène, **caractérisé en ce que** l'on alimente les monomères à polymériser à la réaction de polymérisation dans 3 heures.

**2.** Procédé selon la revendication 1, **caractérisé en ce que** l'on introduit préalablement au moins 30% de l'hydrocarbure HC dans le récipient de polymérisation et l'on alimente la quantité résiduelle de l'hydrocarbure HC à la réaction de polymérisation au cours de son déroulement.

**3.** Procédé selon l'une des revendications qui précèdent, **caractérisé en ce que** l'hydrocarbure HC est sélectionné parmi la terpinolène, des $\gamma$-terpinène et le dimère $\alpha$-méthylstyrène.

**4.** Procédé selon l'une des revendications qui précèdent, **caractérisé en ce que** l'initiateur de polymérisation est sélectionné parmi des composés inorganiques et organiques avec un groupe peroxyde.

**5.** Procédé selon l'une des revendications qui précèdent, **caractérisé en ce que** l'on exécute la polymérisation en présence de 0,1 à 10 % en poids d'au moins, un latex germe.

**6.** Procédé selon l'une des revendications qui précèdent, **caractérisé en ce que**, à un moment, lorsqu'au moins 70% des monomères à polymériser ont été alimentés à la réaction de polymérisation, on augmente la concentration du butadiène dans l'addition de monomères pendant une période égale à au moins 1% de la durée d'addition totale de 10% en poids au moins, par rapport aux monomères présents dans l'addition.

**7.** Procédé selon la revendication 6, **caractérisé en ce que** la concentration du butadiène dans l'addition de monomères est augmentée, au cours de cette période, d'au moins 50% en poids.

**8.** Procédé selon la revendication 6 ou 7, **caractérisé en ce que** l'on alimente un mélange de monomères comprenant du styrène, du butadiène et, le cas échéant, des monomères M3 à la réaction de polymérisation en tant qu'addition de monomères Mz1 et ensuite, lorsqu'au moins 70% de l'addition de monomères Mz1 a été alimentée à la réaction de polymérisation, on alimente 0,5 à 20% en poids de butadiène, par rapport à la quantité totale du butadiène total à polymériser en tant qu'addition Mz2, parallèlement à l'addition de monomères Mz1 à la réaction de polymérisation.

**9.** Procédé selon la revendication 8, **caractérisé en ce que** l'on alimente l'addition totale Mz2 dans un intervalle de

temps qui est compris entre 1 et 20% de la durée de l'addition Mz1.

**10.** Procédé selon la revendication 6 ou 7, **caractérisé en ce que** la proportion en poids du styrène dans l'addition de monomères est inférieure à 20% en poids au moment de la fin de l'alimentation de monomères.

**11.** Procédé selon la revendication 10, **caractérisé en ce que** l'on termine l'alimentation du styrène avant la fin de l'alimentation du butadiène.

**12.** Procédé selon l'une des revendications qui précèdent, **caractérisé en ce que** les monomères M3 différents du styrène et du butadiène sont sélectionnés parmi des acides monocarboxyliques et dicarboxyliques monoéthyléniquement insaturés avec 3 à 10 atomes de carbone, leurs amides, leurs hydroxyalkylesters en C2 à C4, leurs N-(hydroxyalkylamides) en C1 à C4 et des nitriles ethyléniquement insaturés.

**13.** Procédé selon l'une des revendications qui précèdent, **caractérisé en ce que** le mélange de monomères à polymériser contient :

- 55 à 70% en poids de styrène,
- 29 à 44% en poids de butadiène et
- 1 à 10% en poids au moins d'un monomère M3.

**14.** Procédé pour la diminution de parties volatiles résiduelles dans des dispersions aqueuses de polymère styrène-butadiène qui contiennent

- 40 à 80% en poids de styrène en tant que monomère M1,
- 20 à 60% en poids de butadiène en tant que monomère M2 et
- 0 à 40% en poids, par rapport à 100% en poids de monomères, de comonomères M3 éthyléniquement insaturés et différents de styrène et de butadiène,

introduits par polymérisation et qui sont préparées selon la méthode de polymérisation d'émulsion aqueuse radicalaire des monomères M1 à M3 selon un procédé d'addition de monomères en présence de 0,05 à 0,5% en poids, par rapport à 100% en poids de monomères, au moins d'un hydrocarbure HC selon la définition de la revendication 1, **caractérisé en ce que** l'on alimente les monomères à polymériser à la réaction de polymérisation dans 3 heures.